# EUROPÄISCHE PATENTANMELDUNG

(11) **EP 1 970 190 A2**
(43) Veröffentlichungstag der Anmeldung: **17.09.2008**
(21) Anmeldenummer: 08152671.7
(22) Anmeldetag: 13.03.2008
(51) Int. Cl.: B29C 49/58, F16J 15/32

(54) **Vorrichtung zum Behandeln von Behältnissen**

(30) Priorität: 14.03.2007 DE 102007013096
(71) Anmelder: KRONES AG, 93068 Neutraubling (DE)
(72) Erfinder: Halbo, Hansjörg, 93142, Maxhütte-Haidhof (DE); Roidl, Wolfgang, 93180, Deuerling (DE); Schmid, Florian, 93346, Ihrlerstein (DE); Blochmann, Erik, 93073, Neutraubling (DE); Stoiber, Christian, 93185, Michelsneukirchen (DE)
(74) Vertreter: Bittner, Bernhard

(57) **Zusammenfassung**

Eine Vorrichtung (1) zum Behandeln von Behältnissen (10), mit einer Düseneinrichtung (4) welche das Behältnis (10) mit einem gasförmigen Medium befüllt, wobei die Düseneinrichtung (4) wenigstens teilweise in eine Mündung (12) des Behältnisses (10) einführbar ist. Weiterhin ist ein Wandungskörper (6) vorgesehen, der wenigstens einen Bereich der Düseneinrichtung in Umfangsrichtung vollständig umgibt, sowie eine Dichtungseinrichtung (8), um einen Raum (R) zwischen dem Behältnis (10) und dem Wandungskörper (6) abzudichten.
Erfindungsgemäß ist die Dichtungseinrichtung (8) in im Wesentlichen radialer Richtung gegen den Außenumfang der Mündung (12) des Behältnisses (10) pressbar.

## Beschreibung

Die Erfindung bezieht sich auf eine Vorrichtung zum Behandeln von Behältnissen und genauer eine Blasdüse zum Blasen von Behältnissen.

Aus dem Stand der Technik ist es im Rahmen der Herstellung verschiedener Gefäße bekannt, diese mit Hilfe einer Blasdüse aufzublasen. Dazu werden entsprechende Rohlinge erwärmt und dann mit Druckluft unter einem Druck im Bereich von 40 bar durch eine Blasdüse beaufschlagt. Aufgrund des hohen Druckes soll dabei generell ein Austreten von Luft oder einem anderen gasförmigen Medium, mit Hilfe dessen das Behältnis expandiert wird, aus einer Druckkammer verhindert werden. So sind aus dem Stand der Technik Vorrichtungen bekannt, welche einen Dichtring aufweisen, der sich vor dem eigentlichen Blasvorgang an den Kragen des Behältnisses anlegt und auf diese Weise einen dichten Raum schafft. Im Rahmen von Maßnahmen zur Kosten- und Gewichtsreduzierung wird jedoch in jüngerer Zeit auch der erwähnte Kragen der Rohlinge in radialer Richtung reduziert, so dass teilweise die Dichtung nicht mehr, wie bisher üblich, in Längsrichtung des Behältnisses auf diesen aufgesetzt werden kann.

Aus der EP 0 768 944 B1 ist eine Dichtungsvorrichtung zwischen einer Vorform eines Behälters aus Kunststoff und einer Blasdüse sowie eine eine solche Dichtungsvorrichtung verwendende Blasformmaschine bekannt. Dabei weist eine Blasdüse eine Dichtung auf, die sich während der Beaufschlagung der Düse mit Luftdruck gegen eine Innenwandung des aufzublasenden Behältnisses drückt. Dabei wird bei dieser Ausführungsform jedoch eine vollständige Dichtigkeit erst erreicht, wenn sich ein gewisser Druck im Inneren des Behältnisses aufgebaut hat.

Aus der DE 698 00 516 T2 ist eine Blasdüse für einen Behälter aus Kunststoff und eine Vorrichtung, die eine solche Blasdüse verwendet, bekannt. Hier legt sich ein Dichtkörper nicht an das Behältnis selbst, sondern eine Tragplatte, die den Vorformling hält, ab. Aus der GB 2 114 502 A ist ein Verfahren zum Formen von hohlen thermoplastischen Körpern bekannt. Dabei wird ebenfalls eine Vorform in einer abgedichteten Art und Weise an einen Blaskopf angeschlossen.

Der vorliegenden Erfindung liegt die Aufgabe zugrunde, eine Vorrichtung zum Behandeln von Behältnissen und insbesondere eine Blasdüse zum Aufblasen von Behältnissen zur Verfügung zu stellen, welche während des Blasvorgangs eine sichere Abdichtung auch bei Vorformlingen mit in radialer Richtung reduzierten Kragen ermöglicht. Dies wird erfindungsgemäß durch eine Vorrichtung nach Anspruch 1, eine Dichtungseinrichtung nach Anspruch 16 und ein Verfahren nach Anspruch 19 erreicht. Vorteilhafte Ausführungsformen und Weiterbildungen sind Gegenstand der Unteransprüche.

Die erfindungsgemäße Vorrichtung zum Behandeln von Behältnissen weist eine Düseneinrichtung auf, welche das Behältnis mit einem gasförmigen Medium befüllt. Die Düseneinrichtung ist gemäß einer bevorzugten Weiterbildung der Erfindung wenigstens teilweise in die Mündung des Behältnisses einführbar. Unter Mündung ist ein Bereich eines Vorformlings zu verstehen, der einen Kragen und den sich darüber in Richtung der Ausgießöffnung erstreckenden Bereich umfasst. Gemäß einer bevorzugten Weiterbildung der Erfindung weist die Mündung ein Gewinde auf. Unter Kragen ist eine radial vorstehende, zumindest teilumfängliche Materialanhäufung zu verstehen, die vorzugsweise als Ring ausgebildet ist. Der Kragen kann zum Beispiel als Tragring als auch als Sicherungsring ausgebildet sein.

Daneben ist ein Wandungskörper vorgesehen, welcher die Düseneinrichtung in wenigstens einem (Längs-) Bereich derselben in Umfangsrichtung vollständig umgibt und mit einer Dichtungseinrichtung, um einen Raum zwischen dem Behältnis und dem Wandungskörper abzudichten. Erfindungsgemäß ist die Dichtungseinrichtung im Wesentlichen in radialer Richtung gegen die Außenoberfläche der Mündung des Behältnisses zustellbar. Die Zustellung bedeutet dabei vorzugsweise, dass eine kraftschlüssige Verbindung, wie z.B. ein Anpressen zwischen Dichtungseinrichtung und Behältnis hergestellt wird. Dabei ist es sowohl denkbar, dass die Dichtungseinrichtung an dem Außenumfang der Mündung anliegt, als auch, dass sie an der Oberfläche der Mündung anliegt, wie zum Beispiel am Kragen. Es ist auch denkbar, dass die Dichtungseinrichtung sowohl an der Blasform als auch am Kragen oder sowohl an der Mündung als auch am Kragen anliegt.

Unter einer Düseneinrichtung wird im Rahmen der vorliegenden Erfindung jede Einrichtung verstanden, durch welche hindurch ein gasförmiges Medium treten kann. Bei dem gasförmigen Medium handelt es sich insbesondere aber nicht ausschließlich um Luft, mit welcher die Vorformlinge expandiert werden.

Unter einem Wandungskörper wird im Rahmen der vorliegenden Erfindung insbesondere eine zylindrische Wand verstanden, welche in einer Längsrichtung des Behältnisses die Düseneinrichtung bzw. einen Bereich der Düseneinrichtung in der Längsrichtung derselben vollständig umgibt. Bevorzugt wird dieser Wandungskörper vor dem Blasvorgang über die Mündung des Vorformlings geschoben und dann mit Hilfe der Dichtungseinrichtung der Raum zwischen dem Behältnis und dem Wandungskörper abgeschlossen.

Dadurch, dass die Dichtungseinrichtung in im Wesentlichen radialer Richtung gegen den Außenumfang der Mündung pressbar ist, ist es möglich, den Radius der bisherigen Kragen zu verringern, ohne gleichzeitig eine Einbuße der Abdichtungsqualität in Kauf nehmen zu müssen. Unter einer im Wesentlichen radialen Richtung wird verstanden, dass die Dichtungseinrichtung in einer Richtung gegen den Außenumfang des Behältnisses pressbar ist, die bezüglich der Längsrichtung des Behältnisses einen Winkel zwischen 60° und 120°, bevorzugt zwischen 70° und 110°, besonders bevorzugt zwischen 80° und 100° und besonders bevorzugt zwischen 85° und 95° einschließt.

Bevorzugt ist die Dichtungseinrichtung bereits vor dem eigentlichen Befüllvorgang in radialer Richtung gegen den Außenumfang der Mündung des Behältnisses pressbar. Auf diese Weise wird erreicht, dass der eigentliche Befüllungsvorgang des Behältnisses bereits bei vollständiger Abdichtung des Behältnisses durchgeführt werden kann. Es wäre jedoch auch möglich, die Dichtungseinrichtung so auszuführen, dass sie erst bei Einleitung des eigentlichen Befüllungsvorgangs durch den sich aufbauenden Druck gegen den Außenumfang des Behältnisses gepresst wird.

Bei einer weiteren vorteilhaften Ausführungsform weist die Dichtungseinrichtung eine ringförmige Gestalt mit einem veränderbaren Innenquerschnitt bzw. Innendurchmesser auf. Durch eine Veränderung des Innenquerschnitts ist es möglich, dass sich ein Abschnitt der Dichtungseinrichtung bevorzugt voll umfänglich an den Außenumfang des Behältnisses anlegt. Durch den veränderbaren Innenquerschnitt bzw. Innendurchmesser der Dichtungseinrichtung wird erreicht, dass diese mit einem größeren Querschnitt über die Mündung des Behältnisses geschoben wird und erst, wenn sie in der Längsrichtung des Behältnisses eine Endstellung erreicht hat und insbesondere bereits über ein Gewinde an der Mündung des Flaschenhalses geschoben wurde, verengt wird, d. h. sich ihr Querschnitt verringert.

Vorzugsweise ist ein Bereich der Dichtungseinrichtung an dem Wandungskörper angeordnet. Besonders bevorzugt handelt es sich dabei um einen radial außenliegenden Bereich, der ebenfalls vollständig in Umfangsrichtung an dem Wandungskörper anliegt und an diesem befestigt ist. Damit kann durch ein Anpressen der Dichtungseinrichtung an das Behältnis der Raum zwischen dem Behältnis und dem Wandungskörper geschlossen werden.

Bei einer weiteren vorteilhaften Ausführungsform ist die Dichtungseinrichtung aus einem Elastomer hergestellt.

Besonders bevorzugt weist die Dichtungseinrichtung einen Grundkörper und einen gegenüber diesem Grundkörper schwenkbaren Dichtabschnitt auf. Der Grundkörper ist dabei besonders bevorzugt an dem Wandungskörper angeordnet.

Durch eine Schwenkung des Dichtabschnitts gegenüber dem Grundkörper wird erreicht, dass sich ein Bereich des Dichtabschnitts radial nach innen bewegt und sich in radialer Richtung an die Mündung des Behältnisses anlegt.

Besonders bevorzugt weist der Wandungskörper einen radial nach innen ragenden Befestigungsabschnitt auf, an dem die Dichtungseinrichtung befestigt ist. Zwischen diesem Befestigungsabschnitt und dem Behältnis wird damit durch die Dichtungseinrichtung der Raum abgeschlossen.

Bei einer weiteren bevorzugten Ausführungsform weist der Wandungskörper eine an der Dichtungseinrichtung angeordnete Ausnehmung auf. Diese Ausnehmung dient dazu, dass ein Bereich der Dichtungseinrichtung beim Schwenken des Dichtabschnitts in diese Ausnehmung eintreten kann und auf diese Weise der Schwenkvorgang erleichtert wird.

Bei einer weiteren vorteilhaften Ausführungsform weist der Wandungskörper einen oder mehrere auf das Behältnis zu bewegbare Andrückkörper auf. Diese Andrückkörper pressen sich bei einer nach unten gerichteten Bewegung des Wandungskörpers beispielsweise an die Dichtungseinrichtung und bewirken eine Bewegung der Dichtungseinrichtung radial nach innen und somit ein Abschließen des Raums zwischen dem Wandungskörper und dem Behältnis. Es ist jedoch auch möglich, den Wandungskörper in seiner Gesamtheit schwenkbar auzuführen.

Es ist ferner möglich, dass die Dichtungseinrichtung direkt an einem oder mehreren Andrückkörpern angeordnet ist und durch eine Bewegung des Andrückkörpers radial nach innen die Dichtungseinrichtung an das Behältnis angedrückt wird.

Vorzugsweise weist der Andrückkörper an seinem Außenumfang eine sich in einer Längsrichtung des Behältnisses hin verjüngende Außenfläche auf. Besonders bevorzugt verjüngt sich diese Außenfläche nach unten, d. h. zum Boden des Behältnisses hin. Bei einer Bewegung des Wandungskörpers nach unten kann diese Außenfläche mit einer Gegenfläche zusammenwirken, wobei durch die Nachuntenbewegung des Wandungskörpers gleichzeitig der Andrückkörper radial nach innen gepresst wird.

Bei einer weiteren vorteilhaften Ausführungsform weist die Vorrichtung einen Druckkanal auf, wobei mittels eines durch diesen Druckkanal geschickten gasförmigen Druckmittels die Dichtungseinrichtung gegen das Behältnis pressbar ist. Besonders bevorzugt handelt es sich um das gleiche Druckmittel, welches auch zum Befüllen der Behältnisse verwendet wird. Sobald sich bei dieser Ausführungsform in den Raum zwischen der Behältniswandung und dem Wandungskörper ein Druck aufbaut, bewirkt dieser Druck, dass sich die Dichtungseinrichtung in radialer Richtung zusammendrückt und an dem Behältnis zu liegen kommt.

Bei einer weiteren bevorzugten Ausführungsform ist die Dichtungseinrichtung in einer Druckkammer angeordnet und gegenüber dieser Druckkammer verschiebbar. Bevorzugt mündet der Druckkanal in diese Druckkammer und durch eine Beaufschlagung des Druckkanals mit dem Druckmittel wird auch die Druckkammer beaufschlagt und auf diese Weise die Dichtungseinrichtung radial nach innen verschoben. Bevorzugt sind sowohl der Druckkanal als auch die Druckkammer in dem Wandungskörper angeordnet.

Bei einer weiteren vorteilhaften Ausführungsform verjüngt sich der Innenquerschnitt bzw. Innendurchmesser der Dichtungseinrichtung in der Längsrichtung des Behältnisses.

Genauer gesagt hat die Dichtungseinrichtung einen Dichtabschnitt und dieser Dichtabschnitt verjüngt sich in der Längsrichtung des Behältnisses von oben nach unten.

Gemäß einer weiteren Ausführungsform der Erfindung ist die Dichtungseinrichtung als Schlauch ausgebildet, der mit Hilfe von Druckluft aufgeblasen werden kann. Der Schlauch befindet sich vorzugsweise in einer Druckkammer wodurch ein Aufblasen der Dichtungseinrichtung ein radiales Zustellen zur Mündung des Behältnisses bewirkt.

Die vorliegende Erfindung ist weiterhin auf eine Dichtungseinrichtung für eine Vorrichtung der oben beschriebenen Art gerichtet. Dabei ist diese Dichtungseinrichtung einteilig ausgebildet, besteht aus einem Elastomer und weist einen kreisförmigen Querschnitt mit einem kreisförmigen Grundkörper auf. Erfindungsgemäß weist die Dichtungseinrichtung in einem ersten Betriebszustand einen ersten vorgegebenen Innendurchmesser und in einem zweiten Betriebszustand einen zweiten von dem ersten vorgegebenen Innendurchmesser abweichenden Innendurchmesser auf. Weiterhin liegt an dem Grundkörper ein ringförmiger Dichtabschnitt an, wobei dieser Dichtabschnitt gegenüber dem Grundkörper schwenkbar ist und sich bezüglich des Grundkörpers radial nach innen erstreckt. Dabei verläuft der Dichtabschnitt in dem ersten Betriebszustand der Dichtungseinrichtung schräg gegenüber einer Ebene der Dichtungseinrichtung. Beispielsweise weist der Dichtabschnitt in einem Betriebszustand eine konische bzw. kegelförmige Gestalt gegenüber dem Grundkörper auf.

Bei einer weiteren bevorzugten Ausführungsform ist zwischen dem Grundkörper und dem Dichtabschnitt ein Übergangsabschnitt angeordnet, wobei besonders bevorzugt in dem Übergangsabschnitt eine geometrische Schwenklinie verläuft, um die der Dichtabschnitt gegenüber dem Grundkörper schwenkbar ist.

Die vorliegende Erfindung ist weiterhin auf ein Verfahren zum Behandeln von Behältnissen gerichtet, wobei dieses mittels einer Düseneinrichtung mit einem gasförmigen Medium befüllt wird. Vorzugsweise wird die Düseneinrichtung zumindest teilweise in eine Mündung des Behältnisses eingeführt, wodurch eine automatische Zentrierung des Vorformlings in einer Blasform durchgeführt wird. Weiterhin wird ein Wandungskörper um den Außenumfang der Mündung geschoben.

Erfindungsgemäß wird die Dichtungseinrichtung in radialer Richtung an die Außenoberfläche der Mündung des Behältnisses angelegt, um einen zwischen dem Behältnis und dem Wandungskörper gebildeten Raum gegenüber der Umgebung abzudichten. Gegenüber dem Stand der Technik wird also bei dem erfindungsgemäßen Verfahren der Dichtungskörper von außen in radialer Richtung an die Mündung des Behältnisses angelegt, wobei unter Mündung auch der Kragen des Behältnisses verstanden werden kann.

Bevorzugt wird die Dichtungseinrichtung an den Außenumfang des Behältnisses angelegt, bevor das Behältnis mit dem gasförmigen Medium befüllt wird. Damit ist der Raum zwischen dem Außenumfang des Behältnisses und dem Wandungskörper geschlossen, bevor das Behältnis mit Druckluft gefüllt wird. So kann verhindert werden, dass während des Beginns des Befüllungsvorgangs Luft nach außen tritt und ein störendes Geräusch erzeugt sowie den Luftverbrauch unnötig erhöht.

Die Erfindung wird vorzugsweise bei der Herstellung von Flaschen aus Kunststoff, bevorzugt aus PET, verwendet. Die Flaschen werden vorzugsweise in einer Streckblasmaschine, besonders bevorzugt in einer Rotationsstreckblasmaschine hergestellt. In der Streckblasmaschine befinden sich mehrere Blasvorrichtungen, die jeweils mindestens eine Blasform, eine Vorrichtung zum Herstellen von Flaschen, sowie mindestens drei Ventile zum Schalten der Blasluft aufweisen.

Weitere vorteilhafte Ausführungsformen ergeben sich aus den beigefügten Zeichnungen.

Darin zeigen:
- Fig. 1: eine erfindungsgemäße Vorrichtung zum Behandeln von Behältnissen in einer ersten Ausführungsform;
- Fig. 2: eine erfindungsgemäße Vorrichtung zum Behandeln von Behältnissen in einer zweiten Ausführungsform;
- Fig. 3: eine erfindungsgemäße Vorrichtung zum Behandeln von Behältnissen in einer dritten Ausführungsform;
- Fig. 4a: eine erfindungsgemäße Dichtungseinrichtung in einem ersten Zustand;
- Fig. 4b: die Dichtungseinrichtung aus Fig. 4a in einem zweiten Zustand;
- Fig. 4c: die Dichtungseinrichtung aus Fig. 4a in einem dritten Zustand;
- Fig. 4d: drei perspektivische Ansichten der erfindungsgemäßen Dichtungseinrichtung; und
- Fig. 5: eine Blasvorrichtung zum Herstellen von Behältnissen.

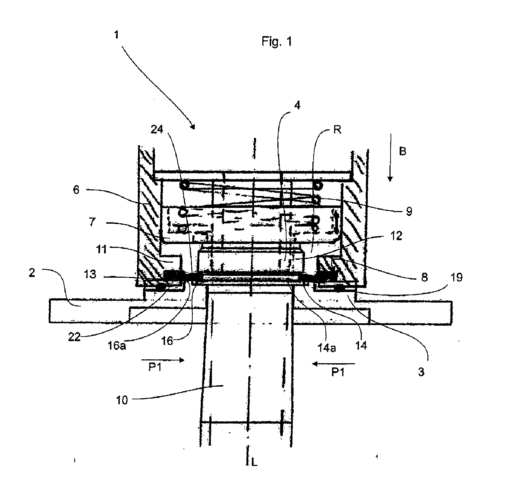

Fig. 1 zeigt eine erfindungsgemäße Vorrichtung 1 zum Behandeln von Behältnissen in einer schematisierten Darstellung. Dabei bezieht sich das Bezugszeichen 10 auf ein Behältnis bzw. einen Hals des Behältnisses, der während des Blasvorgangs in einer Zentrierplatte 2, die Teil einer Blasform ist, ruht. Genauer gesagt ruht ein Rand oder Kragen 14 des Behältnisses 10 in einer Mulde 16, die in einem Vorsprung 3 der Zentrierplatte 2 gebildet wird. Das Bezugszeichen 16a bezieht sich auf einen umlaufenden, nach oben ragenden Vorsprung, der die Mulde 16 begrenzt. Das Bezugszeichen 19 kennzeichnet einen O-Ring, der zwischen einem Wandungskörper 6 der Vorrichtung 1 und dem Vorsprung 3 liegt, der jedoch vorzugsweise keine Abdichtungsfunktion, sondern eine Anschlagfunktion erfüllt. Das Bezugszeichen L bezieht sich auf eine Längsrichtung bzw. eine Längsachse des Behältnisses 10.

Unterhalb der Zentrierplatte 2 befindet sich eine (nicht gezeigte) Blasform. Das Bezugszeichen 4 zeigt eine (teilweise gestrichelt dargestellte) Düseneinrichtung, welche zum Aufblasen des Behältnisses 10 in dessen Mündung 12 eingeschoben wird.

Zu diesem Zweck wird der Wandungskörper 6 gemeinsam mit der Düseneinrichtung 4 in der Bewegungsrichtung B nach unten geschoben. Dabei stützt sich ein Druckstück 7 gegenüber der Mündung 12 des Behältnisses 10 ab und wird entgegen der Kraft einer Feder 9 nach oben gedrückt bis zu einem bestimmen Anschlag.

Dieses Druckstück 7 ist gegenüber der Düseneinrichtung 4 und dem Wandungskörper 6 in der Längsrichtung L des Behältnisses 10 beweglich, wohingegen die Bewegungen des Wandungskörpers 6 und der Düseneinrichtung 4 miteinander gekoppelt sind bzw. die Düseneinrichtung 4 an dem Wandungskörper 6 angeordnet ist. Durch das Druckstück 7 kann bei einem Zurückziehen der Düseneinrichtung 4 erreicht werden, dass das Behältnis 10 sich leichter von der Düseneinrichtung 4 löst, da das durch die Feder 9 belastete Druckstück 7 die Mündung 12 des Behältnisses in der Längsrichtung L nach unten drückt. Genauer gesagt kann verhindert werden, dass sich während des Zurückziehens der Düseneinrichtung 4 auch das Behältnis 10 in der Längsrichtung L mitbewegt, was die unerwünschte Folge hätte, dass sich der an der Mündung 12 anliegende Dichtabschnitt der Dichtungseinrichtung 8 in Fig. 1 ebenfalls nach oben bewegt und damit möglicherweise eine unerwünschte Position einnimmt.

Im Anschluss wird das Behältnis 10 über die Düseneinrichtung 4 mit einem Druck bzw. mit Druckluft beaufschlagt. Der Raum R, der zwischen der Mündung 12 des Behältnisses 10 und dem Wandungskörper 6 gebildet wird, soll dabei während der Druckbeaufschlagung gasdicht sein, damit im Idealfall keine Druckluft nach außen bezüglich des Wandungskörpers 6 treten kann. Zu diesem Zweck ist eine Dichtungseinrichtung 8 vorgesehen. Diese Dichtungseinrichtung 8 ist fest in einer Ausnehmung 13 des Wandungskörpers 6 angeordnet und bewegt sich damit mit dem Wandungskörper 6 in der Bewegungsrichtung B nach unten.

Genauer gesagt ist an dem Wandungskörper 6 ein radial nach innen ragender Befestigungsabschnitt 11 vorgesehen und in diesem Befestigungsabschnitt 11 wiederum die Ausnehmung 13 für die Dichtungseinrichtung 8. Bei einer Bewegung des Wandungskörpers 6 nach unten wird ein Dichtabschnitt 24 der Dichtungseinrichtung 8 gegen den Vorsprung 16a gepresst. Dies bewirkt, dass dieser Dichtabschnitt 24 sich in der durch den Pfeil P1 angedeuteten radialen Richtung verengt, da der Dichtabschnitt 24 in Fig. 1 nach oben schwenkt und oberhalb des Kragens 14 des Behältnisses 10 in einer Ausnehmung 14a im Bereich der Mündung zu liegen kommt. Man beachte, dass der Kragen 14 bei dieser erfindungsgemäßen Gestaltung in radialer Richtung kleiner gewählt werden kann als im Stand der Technik, da die Radialbewegung der Dichtungseinrichtung 8 bzw. des Dichtabschnitts 24 nicht nur durch den Kragen 14, sondern auch durch den Vorsprung 16a ausgelöst wird.

Durch das Anlegen der Dichtungseinrichtung 8 an das Behältnis 10 bzw. die Ausnehmung 14a wird der Raum zwischen dem Behältnis 10 und dem Wandungskörper 6 im Bereich der Mündung 12 abgedichtet.

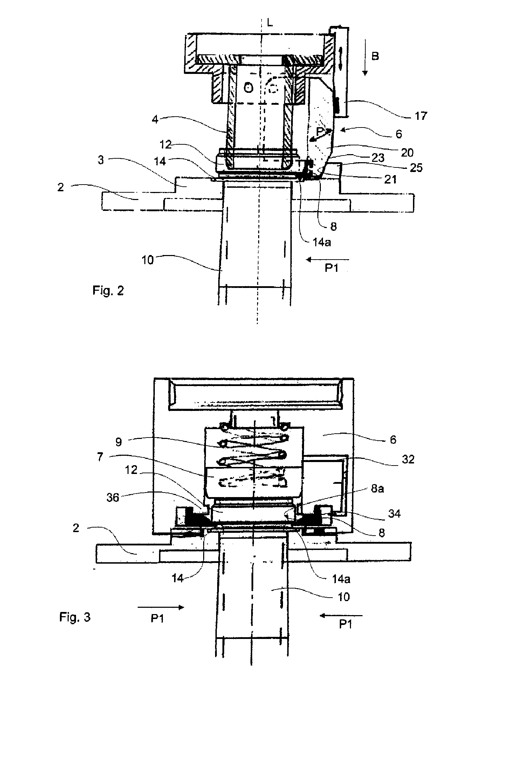

Fig. 2 zeigt eine weitere Ausführungsform einer erfindungsgemäßen Vorrichtung. Hier ist ebenfalls eine Düseneinrichtung 4 vorgesehen, die in die Mündung 12 des Behältnisses 10 eindringt. Weiterhin ist hier eine Vielzahl von Andrückkörpern 20 vorgesehen (nur ein Andrückkörper ist dargestellt), die einen Bereich der Mündung 12 in Umfangsrichtung bevorzugt äqudistant umgeben. An diesem Andrückkörper 20 ist wiederum die Dichtungseinrichtung 8 angeordnet. Wenn sich der Andrückkörper 20 in der Bewegungsrichtung B, welche mit der Längsrichtung L des Behältnisses 10 übereinstimmt, nach unten bewegt, wird eine Schrägfläche 23 des Andrückkörpers 20 gegen einen entsprechend angepasstes Gegenstück 25 gepresst und der Andrückkörper 20 sowie auch die anderen nicht gezeigten Andrückkörper bewegen sich auf diese Weise mit der Dichtungseinrichtung 8 radial nach innen. Auch in diesem Falle greift die Dichtungseinrichtung 8 in die Ausnehmung 14a oberhalb des Kragens 14 ein. Das Gegenstück 25 ist hier auf dem Vorsprung 3 der Zentrierplatte angeordnet. Dabei kann das Gegenstück 25 ringförmig auf dem Vorsprung 3 ausgebildet sein, oder es können mehrere Gegenstücke 25 jeweils in denjenigen Bereichen des Vorsprungs 3 vorgesehen sein, in denen auch die jeweiligen Andrückkörper 20 vorgesehen sind.

Die einzelnen Andrückkörper 20 sind durch ein (nicht gezeigtes) luftdichtes Material miteinander verbunden. So wäre es beispielsweise denkbar, dass ein dehnbarer Schlauch oder eine dehnbare Tülle sämtliche Andrückkörper 20 in der Umfangsrichtung der Düseneinrichtung 4 umgibt. Auch wäre es möglich, dass ein entsprechender Schlauch jeweils an den radial innenliegenden Flächen der einzelnen Andrückkörper 20 anliegt. Daneben könnten auch die einzelnen Andrückkörper 20 jeweils einzelnen miteinander durch gasdichte Materialabschnitte verbunden sein. Die einzelnen Andrückkörper 20 stellen in ihrer Gesamtheit gemeinsam mit dem erwähnten (nicht gezeigten) luftdichten Material den Wandungskörper 6 dar.

Die einzelnen Andrückkörper 20 sind hier über einen Schwenkpunkt an einem Röhrenkörper 17 angeordnet damit sie geringfügig in radialer Richtung (Pfeil P) nach innen verschoben werden können. Das Bezugszeichen 21 kennzeichnet eine Schrägfläche an dem Gegenstück 25 die bewirkt, dass sich bei einer Bewegung des Wandungskörpers 6 nach unten die Dichtungseinrichtung 8 in radialer Richtung auf das Behältnis 10 zubewegt und auf diese Weise den Dichtungseffekt erreicht. Bei der in Fig. 2 gezeigten Ausführungsform ist es möglich, dass sich die Dichtungseinrichtung 8 nicht nur an die Ausnehmung 14a sondern auch an der Mündung 12 des Behältnisses 10 anlegt. Auch hier wird zwischen der Mündung 12 des Behältnisses 10 und dem Wandungskörper 6 ein abgedichteter Raum R gebildet. Bei der in Fig. 2 gezeigten Ausführungsform wird zunächst durch die Abwärtsbewegung des Wandungskörpers 6 der Raum R luftdicht abgeschlossen und erst anschließend das Behältnis 10 mit Druckluft beaufschlagt.

Fig. 3 zeigt eine weitere Ausführungsform einer erfindungsgemäßen Vorrichtung 1. Bei dieser Ausführungsform weist der Wandungskörper 6 einen Druckluftkanal 32 auf, sowie sich eine an den Druckluftkanal 32 anschließende Druckkammer 34. Dieser Druckluftkammer 32 ist hier umlaufend ausgebildet, und über den Druckkanal 32 wird die Druckkammer 34 mit Druckluft befüllt. Das Bezugszeichen 8 zeigt auch hier wieder die Dichtungseinrichtung, die sich in Folge einer Druckbeaufschlagung radial nach innen bewegt und auch diese Weise wiederum in die Ausnehmung 14a eingreift und die Dichtungswirkung hervorruft. Auch hier ist es möglich, dass die Dichtungseinrichtung 8, die eine Schrägfläche 8a aufweist, sich auch noch zumindest teilweise an die Mündung 12 des Behältnisses 10 anlegt. Bei der in Fig. 3 gezeigten Ausführungsform wird damit die Abdichtung erst in Folge der Druckbeaufschlagung erreicht, da erst durch diese Druckbeaufschlagung die Dichtungseinrichtung 8 in radialer Richtung nach innen gepresst und auf diese Weise die Abdichtung bewirkt wird. Dabei weist hier der Wandungskörper 6 einen Vorsprung 36 bzw. eine Gleiteinrichtung auf, der gegenüber die Dichtungseinrichtung 8 radial nach innen gleiten kann. Hier ist zu beachten, dass die Dichtungseinrichtung 8 in ihrer Gesamtheit bei Druckbeaufschlagung gestaucht wird und nicht ein Abschnitt der Dichtungseinrichtung 8 gegenüber einem anderen Abschnitt derselben in radialer Richtung verschoben wird.

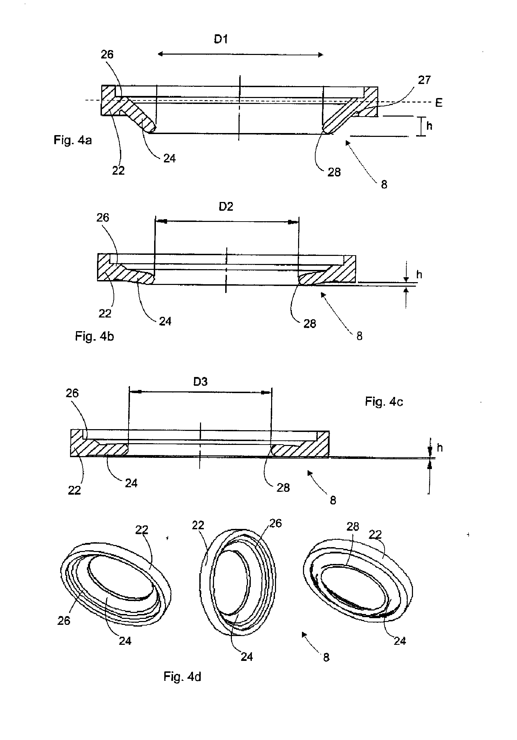

Fig. 4a zeigt eine Dichtungseinrichtung 8 für die in Fig. 1 gezeigte Vorrichtung 1. Diese Dichtungseinrichtung 8 weist einen ringförmigen Grundkörper 22 auf, an dem ein Dichtabschnitt 24 angeordnet ist. In Fig. 4a ist die Dichtungseinrichtung 8 in einem ersten Zustand, genauer gesagt in einem unbelasteten Zustand oder in einem Zustand ohne Vorspannung gezeigt. Dieser Zustand besteht, bevor die Dichtungseinrichtung 8 auf oder um das Behältnis 10 bzw. die Zentrierplatte 2 gesenkt wird. Der Dichtabschnitt 24 verläuft hier schräg nach unten bzw. in der Gesamtheit bildet der Dichtungsabschnitt 24 einen kegelstumpfförmigen Querschnitt. Das Bezugszeichen D1 bezieht sich auf den Innendurchmesser der unbelasteten Dichtungseinrichtung 8. Das Bezugszeichen h zeigt die Höhe um die die gekrümmte Spitze 28 gegenüber dem Grundkörper 22 nach unten herausragt. zwischen dem Grundkörper 22 und dem Dichtabschnitt 24 befindet sich eine Ausnehmung 27 durch die ein Schwenken des Dichtabschnitts 24 gegenüber dem Grundkörper 22 erleichtert wird. Der Bereich 28 legt sich an den Außenumfang bzw. die Außenoberfläche des Behältnisses 10 an. Die in den Figuren 4a - 4c gezeigte Dichtungseinrichtung 8 findet bei der in Fig. 1 gezeigten Vorrichtung 1 Anwendung. Das Bezugszeichen E bezieht sich auf die Ebene der Dichtungseinrichtung 8.

Fig. 4b zeigt die Dichtungseinrichtung 8 aus Fig. 4a in einem zweiten Zustand, hier in einem Zustand, in dem eine gewisse Vorspannung an dem Dichtabschnitt 24 anliegt. Durch diese Vorspannung vermindert sich der Durchmesser D1 auf den Durchmesser D2. Die Änderungen des Durchmessers liegen hier in einem Bereich zwischen 1mm und 4mm bevorzugt zwischen 1,5mm und 3,5mm und besonders bevorzugt in einem Bereich zwischen 1,5mm und 2,5mm. Man erkennt, dass hier der Dichtabschnitt 24 fast mit dem Grundkörper 22 ausgerichtet ist, sich also kurz vor seinem Scheitelpunkt befindet.

Fig. 4c zeigt die Dichtungseinrichtung 8 aus Fig. 4a im Scheitelpunkt, d. h. hier ist der Dichtabschnitt 24 im Wesentlichen waagerecht angeordnet und damit wird in dieser Position der geringste Durchmesser D3 der Dichtungseinrichtung 8 bestimmt. Die Höhe h zwischen dem Dichtabschnitt 24 und dem Grundkörper 22 liegt hier unter 1mm, bevorzugt unter 0,5mm und besonders bevorzugt unter 0,3mm. Die Höhe h in Fig. 1 liegt im Bereich von 3mm. Dies bedeutet, dass im Rahmen der Abwärtsbewegung die Spitze 28 des Dichtabschnitts 24 gegenüber dem Grundkörper 22 zwischen 2mm und 4mm bevorzugt zwischen 2,5mm und 3,5mm und besonders bevorzugt zwischen 2,7mm und 3,1mm bewegt werden kann. Diese Dimensionen sind besonders vorteilhaft für die Funktionsweise der erfindungsgemäßen Dichtungseinrichtung 8 und wurden in langen und aufwändigen Experimenten festgelegt. Ein zu großer Bereich der Höhendifferenz Δh zwischen den Zuständen in Fig. 4a und in Fig. 4c bewirkt, dass der Bereich zwischen dem Dichtabschnitt 24 und dem Behältnis 10 nicht vollständig abgedichtet werden kann. Ebenfalls würde eine zu geringe Höhendifferenz zu Undichtigkeit führen.

Fig. 4d zeigt drei perspektivische Ansichten der erfindungsgemäßen Dichtungseinrichtung 8. Man erkennt auch hier den Grundkörper 22 und den an dem Grundkörper 22 angeordneten Dichtabschnitt 24. Daneben ist auch der Übergangsabschnitt 26 zu erkennen, um den sich der Dichtabschnitt 24 gegenüber dem Grundkörper 22 schwenken lässt.

Die Dichtungseinrichtung 8 ist hier aus einem Elastomer und insbesondere einem Polyurethansystem hergestellt.

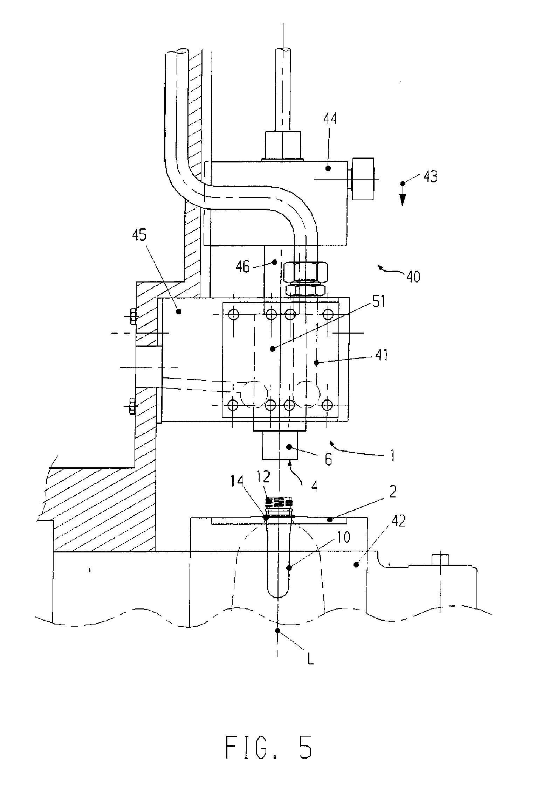

Figur 5 zeigt eine Blasvorrichtung 40 in einer hier nicht gezeigten Rotationsstreckblasmaschine. Die Blasvorrichtung 40 enthält eine Blasform 42 mit einer Zentrierplatte 2. Ein Behältnis 10, das einen Kragen 14 aufweist ist so in die Blasform 42 eingebracht, dass sich der Kragen 14 auf der Zentrierplatte 2 abstützt. Die Blasvorrichtung 40 weist weiterhin einen Ventilblock 45 auf, an dem vier Ventile (hier sind nur zwei zu sehen) 41 und 51 angebracht sind. Die Ventile schalten die Blasluft, die in die Behältnisse 10 eingebracht wird. Durch den Ventilblock 45 bewegt sich der Blaskolben 46, der mit Hilfe der Verstelleinrichtung 44 entlang des Pfeils 43 höhenverstellbar angeordnet ist. Am unteren Ende des Blaskolbens 46 befindet sich die Düseneinrichtung 4 sowie der Wandungskörper 6. Durch die Bewegung des Blaskolbens 46 in Richtung des Pfeils 43 wird der Wandungskörper 6 über die Mündung 12 des Behältnisses 10 gefahren und durch die hier nicht dargestellte Dichtungseinrichtung 8 eine Abdichtung zur Umgebung hergestellt. Somit kann das Behältnis 10 aufgeblasen werden. Gemäß einer bevorzugten Weiterbildung der Erfindung wird in dem Blaskolben 46 eine hier nicht gezeigte Reckstange geführt, die während des Blasvorgangs in das Behältnis 10 eingeführt wird, um es zu recken.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung (1) zum Behandeln von Behältnissen (10), mit einer Düseneinrichtung (4), welche das Behältnis (10) mit einem gasförmigen Medium befüllt, mit einem Wandungskörper (6) welcher wenigstens einen Bereich der Düseneinrichtung (4) in Umfangsrichtung vollständig umgibt und mit einer Dichtungseinrichtung (8), um einen Raum (R) zwischen dem Behältnis (10) und dem Wandungskörper (6) abzudichten, **dadurch gekennzeichnet, dass** die Dichtungseinrichtung (8) in im Wesentlichen radialer Richtung gegen eine Außenoberfläche der Mündung (12) des Behältnisses (10) zustellbar ist.

2. Vorrichtung (1) nach Anspruch 1, **dadurch gekennzeichnet, dass** die Düseneinrichtung (4) wenigstens teilweise in die Mündung (12) des Behältnisses (10) einführbar ist.

3. Vorrichtung (1) nach Anspruch 1, **dadurch gekennzeichnet, dass** die Dichtungseinrichtung (8) eine ringförmige Gestalt mit einem veränderbaren Innendurchmesser (D1, D2, D3) aufweist.

4. Vorrichtung (1) nach wenigstens einem der vorangegangenen Ansprüche, **dadurch gekennzeichnet, dass** ein Bereich der Dichtungseinrichtung (8) an dem Wandungskörper (6) angeordnet ist.

5. Vorrichtung (1) nach wenigstens einem der vorangegangenen Ansprüche, **dadurch gekennzeichnet, dass** die Dichtungseinrichtung (8) aus einem Elastomer hergestellt ist.

6. Vorrichtung (1) nach wenigstens einem der vorangegangenen Ansprüche, **dadurch gekennzeichnet, dass** die Dichtungseinrichtung (8) einen Grundkörper (22) und einen gegenüber diesem Grundkörper (22) schwenkbaren Dichtabschnitt (24) aufweist.

7. Vorrichtung (1) nach wenigstens einem der vorangegangenen Ansprüche, **dadurch gekennzeichnet, dass** die Wandungskörper (6) einen radial nach innen ragenden Befestigungsabschnitt (11) aufweist, an dem die Dichtungseinrichtung (8) befestigt ist.

8. Vorrichtung (1) nach wenigstens einem der vorangegangenen Ansprüche, **dadurch gekennzeichnet, dass** der Wandungskörper (6) eine an der Dichtungseinrichtung (8) angeordnete Ausnehmung aufweist.

9. Vorrichtung (1) nach wenigstens einem der vorangegangenen Ansprüche **dadurch gekennzeichnet, dass** der Wandungskörper (6) wenigstens einen auf das Behältnis (10) zubewegbaren Andrückkörper (20) aufweist.

10. Vorrichtung (1) nach Anspruch 8, **dadurch gekennzeichnet, dass** der Andrückkörper (20) an seinem Aussenumfang eine sich einer Längsrichtung (L) des Behältnisses (10) hin verjüngende Außenfläche (23) aufweist.

11. Vorrichtung (1) nach wenigstens einem der vorangegangenen Ansprüche, **dadurch gekennzeichnet, dass** die Vorrichtung (1) einen Druckkanal (32) aufweist, wobei mittels eines durch diesen Druckkanal (32) geschickten gasförmgen Druckmittels die Dichtungseinrichtung (8) gegen das Behältnis (10) pressbar ist.

12. Vorrichtung (1) nach wenigstens einem der vorangegangenen Ansprüche, **dadurch gekennzeichnet, dass** die Dichtungseinrichtung (8) in einer Druckkammer (34) angeordnet und gegenüber dieser Druckkammer (34) verschiebbar ist.

13. Vorrichtung (1) nach wenigstens einem der vorangegangenen Ansprüche, **dadurch gekennzeichnet, dass** sich der Innendurchmesser (D1, D2, D3) der Dichtungseinrichtung (8) in der Längsrichtung (L) des Behältnisses (10) verjüngt.

14. Vorrichtung (1) nach wenigstens einem der vorangegangenen Ansprüche, **dadurch gekennzeichnet, dass** die Vorrichtung (1) teil einer Blasvorrichtung (40) für Behältnisse (10) ist, die mindestens drei Ventile (41, 51) zur Steuerung des gasförmigen Blasmediums aufweist.

15. Vorrichtung (1) nach wenigstens einem der vorhergehenden Ansprüche, **dadurch gekennzeichnet, dass** die Blasvorrichtung (40) Teil einer Blasmaschine ist, die um eine zentrale Maschinenachse umläuft und die an einem Maschinenkarussell mehrere Blasvorrichtungen (40) äquidistant angeordnet aufweist.

16. Dichtungseinrichtung (8) für eine Vorrichtung (1) nach wenigstens einem der vorangegangenen Ansprüche wobei die Dichtungseinrichtung (8) einteilig ausgebildet ist, aus einem Elastomer besteht und einen kreisförmigen Querschnitt sowie einen ringförmigen Grundkörper (22) aufweist, **dadurch gekennzeichnet, dass** die Dichtungseinrichtung (8) in einem ersten Betriebszustand einen ersten vorgegebenen Innendurchmesser (D1) und in einem zweiten Betriebszustand einen zweiten von dem ersten vorgegebenen Innendurchmesser (D1) abweichenden Innendurchmesser (D2) aufweist, an dem Grundkörper (22) ein ringförmiger Dichtabschnitt (24) anliegt, der Dichtabschnitt (24) schwenkbar gegenüber dem Grundkörper (22) ist und sich bezüglich des Grundkörpers (22) nach innen erstreckt, wobei sich der Dichtabschnitt (24) in dem ersten Betriebszustand der Dichtungseinrichtung (8) schräg gegenüber einer Ebene (E) der Dichtungseinrichtung (8) erstreckt.

17. Dichtungseinrichtung (8) nach Anspruch 16, **dadurch gekennzeichnet, dass** zwischen dem Grundkörper (22) und dem Dichtabschnitt (24) ein Übergangsabschnitt (26) angeordnet ist.

18. Dichtungseinrichtung (8) nach Anspruch 16, **dadurch gekennzeichnet, dass** in dem Übergangsabschnitt (26) eine geometrische Schwenklinie verläuft, um die der Dichtabschnitt (24) gegenüber dem Grundkörper (22) schwenkbar ist.

19. Verfahren zum Behandeln von Behältnissen (10), wobei dieses Behältnis (10) mittels einer Düseneinrichtung (4) mit einem gasförmigen Medium befüllt wird, und wobei ein Wandungskörper (6) um den Außenumfang einer Mündung (12) des Behältnisses (10) geschoben wird, **dadurch gekennzeichnet, dass** eine Dichtungseinrichtung (8) in radialer Richtung an die Außenoberfläche der Mündung (12) des Behältnisses (10) angelegt wird, um einen zwischen dem Behältnis (10) und dem Wandungskörper (6) gebildeten Raum (R) abzudichten.

20. Verfahren nach Anspruch 19, **dadurch gekennzeichnet, dass** die Düseneinrichtung (4) beim Aufschieben um den Außenumfang der Mündung (12) des Behältnisses (10) zumindest teilweise in die Mündung (12) eingeführt wird.

21. Verfahren nach wenigstens einem der Ansprüche 19 bis 20, **dadurch gekennzeichnet, dass** die Dichtungseinrichtung (8) zum Zwecke der Abdichtung radial so zugestellt wird, dass sie zumindest den Kragen (14) des Behältnisses (10) berührt.

22. Verfahren nach wenigstens einem der Ansprüche 19 bis 21, **dadurch gekennzeichnet, dass** die Dichtungseinrichtung (8) zum Zwecke der Abdichtung radial so zugestellt wird, dass sie sowohl die Zentrierplatte, als auch die Außenoberfläche der Mündung (12) des Behältnisses (10) berührt.

23. Verfahren nach wenigstens einem der Ansprüche 19 bis 22, **dadurch gekennzeichnet, dass** die Dichtungseinrichtung (8) an den Außenumfang des Behältnisses (10) angelegt wird, bevor das Behältnis (10) mit dem gasförmigen Medium befüllt wird.

24. Verfahren nach wenigstens einem der Ansprüche 19 bis 23, **dadurch gekennzeichnet, dass** die Dichtwirkung der Dichtungseinrichtung (8) erst nach dem Beginn des Befüllens des Behältnisses (10) erzeugt wird.
